# EUROPEAN PATENT SPECIFICATION

(11) **EP 0 416 757 B1**
(45) Date of publication and mention of the grant of the patent: **17.02.1993**
(21) Application number: 90308794.8
(22) Date of filing: 09.08.1990
(51) Int. Cl.: C10M 159/22

(54) **Process for producing an alkaline earth metal borate dispersion**
Verfahren zur Herstellung von Erdalkalimetallborat-Dispersion
Procédé pour la production d'une dispersion de borate d'un métal alcalino terreux

(30) Priority: 09.08.1989 JP 204887/89
(43) Date of publication of application: 13.03.1991
(73) Proprietor: NIPPON OIL COMPANY, LIMITED, Tokyo (JP)
(72) Inventor: Inoue, Kiyoshi, Kanagawa-ken (JP)
(74) Representative: Silverman, Warren

(56) References cited:
- WO-A-88/04685
- FR-A- 2 554 825
- US-A- 3 105 049
- US-A- 4 683 126

## Description

This invention relates to a process for producing an alkaline earth metal borate dispersion, more particularly to a process for producing an alkaline earth metal borate dispersion containing homogeneously dispersed very fine alkaline earth metal borate.

A boron compound serves to improve the oxidation stability, rust-preventing properties, friction reducing properties and extreme pressure properties of a lubricating oil. Further, it has recently been revealed that an alkaline earth borate has excellent acid neutralizing properties and excellent hydrolytic stability when compared with conventional calcium carbonate. Under such circumstances, many research workers have attempted to incorporate stably a boron compound in the form of an alkaline earth metal borate in a lubricating oil. Especially, processes for stabilizing an alkaline earth metal borate in the form of ultramicroparticles in an oil by using a metallic detergent, for example, an alkaline earth metal sulfonate or an alkaline earth metal salicylate as a protective colloid have been studied.

For example, U.S. Pat. No. 3,679,584 discloses a process comprising reacting an alkaline earth metal carbonate overbased compound, namely, an overbased alkaline earth metal sulfonate with boric acid and an alkaline earth metal hydroxide in a mineral oil or a diluent by heating while blowing carbon dioxide into the reaction system. Further, U.S. Pat. Nos. 3,829,381, 4,744,920, etc., disclose processes comprising reacting an overbased alkaline earth metal sulfonate with boric acid in a mineral oil. Furthermore, Can. Pat. No. 1,239,421 discloses a process for reacting an alkaline earth metal carbonate overbased compound, namely, an overbased alkaline earth metal salicylate with boric acid in a diluent by heating.

Since these processes comprise the use of a lubricating oil additive based on an alkaline earth metal carbonate overbased compound as a starting material, it is necessary for producing a lubricating oil additive based on an alkaline earth metal borate overbased compound that the reaction be conducted in at least two stages, namely, making a neutral metallic detergent overbased and then reacting the overbased detergent with boric acid. On the other hand, the inventor of this invention disclosed in Japanese Patent Laid-Open No. 204298/1986 that an alkaline earth metal borate overbased sulfonate could be produced by reacting water with boric acid and an alkaline earth metal hydroxide or oxide by heating in an oil solution of a neutral alkaline earth metal sulfonate, namely, by a one-stage reaction.

However, it turned out that the process disclosed in the Japanese Patent Laid-Open No. 204298/1986 could not provide any product of a high total base number, namely, a high-boron content product when it was applied to the production of an alkaline earth metal borate overbased salicylate or phenolate, thought it was suitable for the production of an alkaline earth metal borate overbased sulfonate.

It is an object of this invention to provide a simple process for producing an alkaline earth metal salt dispersion, namely, an alkaline earth metal borate overbased salicylate, phenolate or catecholate dispersion having a very small particle diameter and a large boron to alkaline earth metal molar ratio and excelling in detergent dispersion properties, extreme pressure properties, friction and abrasion resistance, corrosion preventing properties, rust preventing properties, hydrolytic stability and acid neutralizing properties by a one-stage reaction.

To accomplish the abovementioned object, the inventor of this invention has made intensive studies on a process for producing alkaline earth metal borate overbased salicylate, phenolate and catecholate, and has found out that they can be obtained at a high boron content by a specified production process, thus accomplishing this invention.

Namely this invention provides a process for producing an alkaline earth metal borate dispersion, comprising the two steps of:
(1) reacting a mixture of
   (A) 100 parts by weight of at least one oil-soluble alkaline earth metal salt selected from the group consisting of an oil-soluble neutral alkaline earth metal salicylate, an oil-soluble neutral alkaline earth metal phenolate and an oil-soluble alkaline earth metal catecholate with
   (B) 10 to 200 parts by weight of an alkaline earth metal hydroxide or oxide,
   (C) 0.5 to 6.5 moles, per mole of component B, of a boric acid or anhydride,
   (D) 20 to 1000 parts by weight of an alkanol of 1 to 4 carbon atoms,
   (E) 1 to 40 parts by weight of water and
   (F) 40 to 1000 parts by weight of a diluent at 20 to 120 °C, and
(2) removing the water and optionally part of the alkanol and/or the diluent from the reaction mixture by heating it to 100 to 200 °C.

This invention will now be described in more detail.

Component A mentioned in step (1) (hereinafter referred to as the reaction step) of this invention is at least one oil-soluble alkaline earth metal salt selected from an oil-soluble neutral alkaline earth metal salicylate (normal salt), an oil-soluble neutral alkaline earth metal phenolate (normal salt) and an oil-soluble neutral alkaline earth metal catecholate (normal salt), and more particularly a salt of an alkaline earth metal such as magnesium, calcium or barium with an alkylsalicylic acid, an alkylphenol or an alkylcatechol of a molecular weight of about 200 to 500 can be used. Examples of these compounds include those prepared by the production processes disclosed in Japanese Patent Laid-Open No. 101196/1985, Japanese Patent Publication No. 35325/1973 and U.S. Pat. No. 4,668,409.

Component B mentioned in the reaction step of this invention is an alkaline earth metal hydroxide or oxide, and examples thereof include magnesium hydroxide, calcium hydroxide, barium hydroxide, magnesium oxide, calcium oxide, and barium oxide. The kind of the alkaline earth metal of component B may be the same as or different from that of component A.

The amount of component B used in the reaction step is 10 to 200 parts by weight, desirably 20 to 100 parts by weight per 100 parts by weight of component A.

Component C mentioned in the reaction step of this invention is a boric acid. Examples thereof include orthoboric acid, metaboric acid, tetraboric acid and boric anhydride. Generally orthoboric acid is desirable. The amount of component C used in the reaction step is 0.5 to 6.5 moles, desirably 1.0 to 6.0 moles per mole of component B.

Component D mentioned in the reaction step of this invention is an alkanol having 1 to 4 carbon atoms. A desirable component D is a monoalkanol or a dialkanol, and examples thereof include methanol, ethanol, propanol, butanol, ethylene glycol, propylene glycol, triethylene glycol, butylene glycol, tetramethylene glycol and mixtures thereof. The amount of component D used in the reaction step is 20 to 1000 parts by weight, desirably 60 to 600 parts by weight per 100 parts by weight of component A.

Component E mentioned in the reaction step of this invention is water. By mixing the water with the abovementioned component D at an appropriate ratio in the reaction step, the formed alkaline earth metal borate particles become very fine, and the amount of coarse particles to be removed in the final filtration step can be decreased. The amount of component E used in the reaction step is 1 to 40 parts by weight, desirably 2 to 20 parts by weight per 100 parts by weight of component A.

Component F mentioned in the reaction step of this invention is a diluent, and a nonpolar organic solvent of a boiling point of 60 °C or higher can be usually used. Examples of the diluent include aromatic hydrocarbons such as benzene, toluene and xylene, petroleum-derived solvents such as benzine, ligroin, mineral spirit and cleaning solvents and a gasoline fraction, a kerosene fraction, a gas oil fraction and a lubricating oil fraction of a mineral oil. It is to be noted that component F includes the mineral oil used as a dispersion medium for component A, i.e., a neutral alkaline earth metal salicylate, a neutral alkaline earth metal phenolate, and a neutral alkaline earth metal catecholate.

The amount of component F used in the reaction step of this invention is 40 to 1000 parts by weight, desirably 200 to 600 parts by weight per 100 parts by weight of component A.

Although the diluent as component F is used from the beginning as a dispersion medium for component A in the form of a mixture thereof with component A, it is also possible to add, if necessary, a diluent which is the same as or different from this dispersion medium in the reaction step.

In the reaction step of this invention, specified amounts of the abovementioned components A to F are reacted with each other under through agitation at a reaction temperature of 20 to 100 °C, desirably 40 to 95 °C. In this invention, the reaction is desirably carried out at atmospheric pressure in the abovementioned reaction temperature range. Although the reaction time is arbitrary, it is usually 2 to 8 hours, desirably 3 to 5 hours.

The reaction mixture obtained in this way is subjected to the subsequent step (2) (hereinafter referred to as the distillation step). While agitating the reaction mixture, the system is heated to 100 to 200 °C, desirably 110 to 160 °C and kept at that temperature for usually 1 to 2 hours to remove the water from the system. In this distillation step, the water added as component E in the reaction step and the water formed by the reaction can be removed while the extent of hydration of the formed alkaline earth metal borate can be suitably regulated. It is also possible to remove part of the alkanol as component D or the diluent as component E or the both in this step, if required.

The alkaline earth metal borate dispersion obtained through the abovementioned reaction and distillation steps may be further purified, if necessary, by means of filtration or the like in order to remove remaining unreacted material and coarse particles of the alkaline earth metal borate.

The alkaline earth metal borate dispersion obtained by the process of this invention usually contains 5 to 30 wt.% of the alkaline earth metal borate. This content can be freely varied by varying a mixing ratio of the alkaline earth metal hydroxide or oxide as component B and the boric acid as component C to the neutral alkaline earth metal salicylate, neutral alkaline earth metal phenolate or neutral alkaline earth metal catecholate as component A in the reaction step.

Further the alkaline earth metal borate dispersion has a boron to alkaline earth metal molar ratio as high as about 0.8 to 6 % according to the overall compositional analysis. This boron originates in component C of this invention, while the alkaline earth metal originates in components A and B. It is a prominent feature of this invention that an alkaline earth metal borate dispersion having such a high boron to alkaline earth metal molar ratio can be obtained.

The particle diameter of the alkaline earth metal borate obtained by the process of this invention is 1x10⁻⁷m (1000 Å) or below, usually 5x10⁻⁸M (500 Å) or below, desirably 2x10⁻⁸m (200 Å) or below. It is another prominent feature of the process of this invention that an alkaline earth metal borate having such a small particle diameter can be obtained.

### (Effects of the Invention)

According to this invention, it is possible, as described above, to obtain an alkaline earth metal borate dispersion by a very simple one-stage reaction. As mentioned above, the obtained alkaline earth metal borate dispersion has a freely variable alkaline earth metal borate content, a high boron to alkaline earth metal molar ratio and further a very small particle diameter.

Further the alkaline earth metal borate dispersion has excellent detergent dispersing properties, friction and abrasion resistance, extreme pressure properties, rust preventing properties, corrosion preventing properties, acid neutralizing properties and hydrolytic stability, so that it can be used as such or in the form diluted with a suitable solvent as an additive for petroleum products such as fuels and lubricating oils or as a rust preventive for corrosion-resistant paints or the like.

This invention will now be described in more detail with reference to Examples and Comparative Examples.

### Example 1

A solution of 100 parts by weight of a neutral calcium alkylphenolate (A) in 100 parts by weight of a lubricating oil fraction, 24 parts by weight of calcium hydroxide (B), 40 parts by weight (2.0 moles per mole of the calcium hydroxide) of orthoboric acid (C), and 400 parts by weight of xylene (F) were put in a 1000-ml four-necked flask fitted with a condenser and heated to 40 °C under agitation. To this mixture was added 200 parts by weight of methanol (D) and 4 parts by weight of water (E), and the resulting mixture was heated under agitation to the reflux temperature (66 °C) and reacted for 3 hours. The reaction mixture was further heated to 140 °C to distill out the methanol, water and xylene. Finally the reaction product was diluted twofold with hexane and filtered, and the hexane was distilled out to leave the desired calcium borate over based alkylphenolate.

This alkylphenolate had the following analytical values:
Ca: 7.2 wt.%
B : 5.5 wt .%
total base number: 207 (JIS K 2501, 5.2.3)

### Example 2

A solution of 100 parts by weight of a neutral calcium alkylsalicylate (A) in 100 parts by weight of a lubricating oil fraction, 24 parts by weight of calcium hydroxide (B), 40 parts by weight (2.0 moles per mole of the calcium hydroxide) of orthoboric acid (C) and 400 parts by weight of xylene (F) were put in a 1000-ml four-necked flask fitted with a condenser and heated to 40 °C under agitation. To this mixture was added 64 parts by weight of methanol (D) and 4 parts by weight of water (E) and the resulting mixture was heated under agitation to the reflux temperature (66 °C) and reacted for 3 hours. The reaction mixture was further heated to 140 °C to distill out the methanol, water and xylene. Finally the reaction product was diluted twofold with hexane and filtered, and the hexane was distilled out to leave the desired calcium borate overbased alkylsalicylate.

This alkylsalicylate had the following analytical values:
Ca: 6.2 wt.%
B : 4.9 wt.%
total base number: 187 (JIS K 2501, 5.2.3)

### Comparative Example 1

A solution of 100 parts by weight of a neutral calcium alkylphenolate (A) in 100 parts by weight of a lubricating oil fraction, 24 parts by weight of calcium hydroxide (B), 40 parts by weight (2.0 moles per mole of the calcium hydroxide) of orthoboric acid and 400 parts by weight of xylene (F) were put in a 1000-ml four-necked flask fitted with a condenser, and heated under agitation to 40 °C. To this mixture was added 4 parts by weight of water (E), and the resulting mixture was heated under agitation to the reflux temperature (90 °C) and reacted for 3 hours. The reaction mixture was further heated to 140 °C to distill out the water and xylene. Finally the reaction product was diluted twofold with hexane and filtered, and the hexane was distilled out to leave the desired calcium borate overbased alkylphenolate.

This alkylphenolate had the following analytical values:
Ca: 3.2 wt.%
B : 0.9 wt.%
total base number: 89 (JIS K 2501, 5.2.3)

### Comparative Example 2

A solution of 100 parts by weight of a neutral calcium alkylsalicylate (A) in 100 parts by weight of a lubricating oil fraction, 24 parts by weight of calcium hydroxide (B), 40 parts by weight (2.0 moles per mole of the calcium hydroxide) of orthoboric acid and 400 parts by weight of xylene (F) were put in a 1000-ml four-necked flask fitted with a condenser, and heated under agitation to 40 °C. To this mixture was added 4 parts by weight of water (E), and the resulting mixture was heated under agitation to the reflex temperature (90 °C) and reacted for 3 hours. The reaction mixture was further heated to 140 °C to distill out the water and xylene. Finally the reaction product was diluted twofold with hexane and filtered, and the hexane was distilled out to leave the desired calcium borate overbased alkylsalicylate.

This alkylsalicylate had the following analytical values:
Ca: 2.9 wt.%
B : 1.8 wt.%
total base number: 85 (JIS K 2501, 5.2.3)

The results of Comparative Examples 1 and 2 clearly indicate that when no alkanol as component D of this invention was used, each of the obtained alkaline earth metal borate dispersions had a smaller total base number than those obtained by the production process of this invention and had poor performances as an additive.

### Comparative Example 3

A solution of 100 parts by weight of a neutral calcium alkylsalicylate (A) in 100 parts by weight of a lubricating oil fraction, 24 parts by weight of calcium hydroxide (B), 40 parts by weight (2.0 moles per mole of the calcium hydroxide), and 400 parts by weight of xylene (F) were put in a 1000-ml four-necked flask fitted with a condenser, and heated under agitation to 40 °C. To this mixture was added 64 parts by weight of methanol (D), and the resulting mixture was heated under agitation to the reflux temperature (66 °C) and reacted for 3 hours. The reaction mixture was further heated to 140 °C to distill out the methanol and the xylene. Finally the reaction product was diluted twofold with hexane and filtered, and the hexane was distilled out. The gelation of the mixture occurred, so that no desired calcium borate overbased alkylsalicylate could be obtained.

## Claims

1. A process for producing an alkaline earth metal borate dispersion, comprising the two steps of:
(1) reacting a mixture of
(A) 100 parts by weight of at least one oil-soluble alkaline earth metal salt selected from the group consisting of an oil-soluble neutral alkaline earth metal salicylate, an oil-soluble neutral alkaline earth metal phenolate and an oil-soluble neutral alkaline earth metal catecholate with
(B) 10 to 200 parts by weight of an alkaline earth metal hydroxide or oxide,
(C) 0.5 to 6.5 moles, per mole of component B, of a boric acid or anhydride.
(D) 20 to 1000 parts by weight of an alkanol of 1 to 4 carbon atoms,
(E) 1 to 40 parts by weight of water and
(F) 40 to 1000 parts by weight of a diluent at 20 to 120 °C, and
(2) removing the water and optionally part of the alkanol and/or the diluent from the reaction mixture by heating it to 100 to 200 °C.

## Patentansprüche

1. Verfahren zur Herstellung einer Erdalkalimetallboratdispersion, das die beiden folgenden Stufen aufweist:
(1) Umsetzung einer Mischung von
(A) 100 Gewichtsteilen mindestens eines der öllöslichen Erdalkalimetallsalze öllösliches neutrales Erdalkalimetallsalicylat, öllösliches neutrales Erdalkalimetallphenolat und öllösliches neutrales Erdalkalimetallkatecholat mit
(B) 10 bis 200 Gewichtsteilen eines Erdalkalimetallhydroxids oder- oxids,
(C) 0,5 bis 6,5 Mol, je Mol der Komponente B, Borsäure oder Borsäureanhydrid,
(D) 20 bis 1000 Gewichtsteile eines Alkanols mit 1 bis 4 Kohlenstoffatomen,
(E) 1 bis 40 Gewichtsteile Wasser und
(F) 40 bis 1000 Gewichtsteile eines Verdünnungsmittels bei 20 bis 120° C, und
(2) Entfernung des Wassers und gegebenenfalls des Alkanols und/oder des Verdünnungsmittels aus der Reaktionsmischung durch Erhitzen auf 100 bis 200°C.

## Revendications

1. Procédé pour produire une dispersion d'un borate d'un métal alcalino-terreux, qui comprend les deux étapes consistant :
(1) à faire réagir un mélange
(A) de 100 parties en poids d'au moins un sel d'un métal alcalino-terreux, soluble dans une huile, choisi parmi l'ensemble comprenant les salicylates neutres de métaux alcalinoterreux solubles dans une huile, les phénolates neutres de métaux alcalino-terreux solubles dans une huile et les catécholates de métaux alcalino-terreux solubles dans une huile,
(B) de 10 à 200 parties en poids d'un hydroxyde ou d'un oxyde d'un métal alcalino-terreux,
(C) de 0,5 à 6,5 moles, par mole du composant B, d'un acide ou d'anhydride borique,
(D) de 20 à 1000 parties d'un alcanol ayant de 1 à 4 atomes de carbone,
(E) de 1 à 40 parties en poids d'eau et
(F) de 40 à 1000 parties en poids d'un diluant à une température de 20 à 120°C, et
(2) à éliminer du mélange réactionnel, par chauffage à une température de 100 à 200°C, l'eau et éventuellement une partie de l'alcanol et/ou du diluant.
